# EUROPEAN PATENT SPECIFICATION

(11) **EP 4 438 353 B1**
(45) Date of publication and mention of the grant of the patent: **29.04.2026**
(21) Application number: 22894795.8
(22) Date of filing: 15.11.2022
(51) Int. Cl.: G08G 1/00, B60H 1/00, B60S 1/02

(54) **AIR CONDITIONING ADJUSTMENT METHOD AND APPARATUS BASED ON NETWORKED INTERACTION, AND ELECTRONIC DEVICE**
VERFAHREN UND VORRICHTUNG ZUR ANPASSUNG EINER KLIMAANLAGE AUF BASIS VON VERNETZTER INTERAKTION UND ELEKTRONISCHE VORRICHTUNG
PROCÉDÉ ET APPAREIL DE RÉGLAGE DE CLIMATISATION BASÉS SUR UNE INTERACTION EN RÉSEAU, ET DISPOSITIF ÉLECTRONIQUE

(30) Priority: 22.11.2021 CN 202111390195
(43) Date of publication of application: 02.10.2024
(73) Proprietor: Great Wall Motor Company Limited, Baoding, Hebei 071000 (CN)
(72) Inventor: ZHENG, Xin, Baoding, Hebei 071000 (CN); HU, Zhonghui, Baoding, Hebei 071000 (CN)
(74) Representative: Klunker IP Patentanwälte PartG mbB
(86) International application number: PCT/CN2022/132052
(87) International publication number: WO 2023/088262

(56) References cited:
- CN-A- 105 270 141
- CN-A- 108 202 696
- CN-A- 110 406 348
- CN-A- 110 803 130
- CN-A- 112 389 159
- CN-A- 113 119 683
- CN-A- 115 042 579
- US-A1- 2014 081 481
- US-A1- 2016 200 166
- US-A1- 2017 036 511
- US-A1- 2020 156 593
- US-A1- 2020 223 285

## Description

### TECHNICAL FIELD

The present invention relates to the field of cars, and particularly relates to a regulating method and corresponding device implementing the method, a corresponding computer program and computer-readable medium storing the computer program, for adjusting onboard air-conditioner parameters for demisting vehicle windows of a target demand vehicle based on networked interaction, carried out by a cloud server.

### BACKGROUND

Most of vehicles are equipped with an automatic air conditioning system, but few people can set the parameters of the onboard automatic air conditioner suitably to ensure the comfortableness. Especially, a learner of vehicle driving is not familiar with the vehicle, and cannot set the air conditioner very professionally. When the vehicle is at a place where the weather varies frequently and the temperature difference between morning and evening is large, during the travelling, it very easily happens that the front windshield rapidly mists, which blocks the sight line of the driver. When the air conditioner is set to be automatic air conditioning, the air conditioner cannot be switched to the correct circulated mode and temperature. Even if it can skip to the defrosting mode, it might be not capable of dealing with the quick misting in a sudden extreme weather because the vehicle setting is for the misting in normal weathers. For example, in Northeast China, extreme weathers frequently appear, which causes abrupt change of the temperature difference, to result in quick misting of the windshield during the driving, which blocks the sight line. That causes a learner of vehicle driving to be in tearing hurry and emotional stress, which easily causes traffic accidents, and has a large potential safety hazard.

In order to solve the above problem, the drivers usually prepare a towel in advance, and, when the front windshield has mist, manually wipe out it, to quickly remove the mist. However, such a handling approach is difficult to be used when mist appears during high-speed travelling or during normal travelling in an urban road condition, therefore, it has a large potential safety hazard. That is difficult to handle for a learner of vehicle driving.

In the prior art, there has not been an effective method to solve the problems of air conditioner setting for dealing with sudden weathers and automatic switching of air-conditioner modes and temperatures.

US 2016/200166 A1 discloses a motor vehicle comprising an heating, ventilating, air conditioning (HVAC) system including a climate control circuit coupled to onboard sensors, a human-machine interface, and climate actuators. The actuators are responsive to respective command parameters generated by the control circuit in response to the sensors and the human-machine interface. A wireless communication system transmits vehicle HVAC data to and receives crowd data from a remote server. The control circuit initiates a request for crowd data via the communication system to the remote server, wherein the request includes peer parameters for identifying a vehicle environment. The control circuit receives a response via the communication system from the remote server. The response comprises crowd data and at least one weight indicating a confidence level associated with the crowd data. The control circuit generates at least one command parameter using a set of fuzzy rules responsive to the crowd data and the weight from the response.

US 2020/156593 A1 discloses a method including: predicting, by a computer device, a time a user will start driving a vehicle; determining, by the computer device, freezing conditions; determining, by the computer device, a time to start a deicing system of the vehicle based on the predicted time and the determined freezing conditions; and generating, by the computer device, an output to start the deicing system at the determined time. A system includes: a windshield wiper that is selectively driven by a windshield wiper motor; a wiper sensor configured to detect an amount of deflection of the windshield wiper from a baseline position; and a computer operatively connected to the windshield wiper motor and the wiper sensor, the computer being configured to: actuate the windshield wiper motor; receive data from the wiper sensor while the windshield wiper motor is actuated; and determine a thickness of ice on a windshield based on the received data.

### SUMMARY

It is an object of the present invention to provide a regulating method and corresponding device implementing the method, a corresponding computer program and computer-readable medium storing the computer program for adjusting onboard air-conditioner parameters for demisting vehicle windows of a target demand vehicle based on networked interaction, carried out by a cloud server, which may enable the target demand vehicle to realize a reasonable setting of the onboard air conditioner.

The method provided by the present invention is defined in accordance to appended claim 1.

The electronic device provided by the present invention is defined in accordance with appended claim 3.

The computer program provided by the present invention is defined in accordance with appended claim 4.

The computer-readable medium provided by the present invention is defined in accordance with appended claim 5.

### BRIEF DESCRIPTION OF THE DRAWINGS

In order to more clearly illustrate the technical solutions of the present invention or the prior art, the figures for describing the invention or the prior art will be briefly described below.
FIG. 1 is a first flow chart of the regulating method for air-conditioner based on networked interaction;
FIG. 2 is a second flow chart of the regulating method for air-conditioner based on networked interaction;
FIG. 3 is a third flow chart of the regulating method for air-conditioner based on networked interaction;
FIG. 4 is a fourth flow chart of the regulating method for air-conditioner based on networked interaction;
FIG. 5 is a schematic structural diagram of the regulating apparatus for air-conditioner based on networked interaction;
FIG. 6 is a schematic structural diagram of the receiving module 201 in FIG. 5;
FIG. 7 is a schematic structural diagram of the analyzing module 202 in FIG. 5;
FIG. 8 is a schematic structural diagram of the first analyzing submodule 2021 in FIG. 7;
FIG. 9 is a schematic structural diagram of the sending module 203 in FIG. 5;
FIG. 10 is a schematic structural diagram of a 5G network device;
FIG. 11 is a schematic structural diagram of an electronic device;
FIG. 12 is a block diagram of a computing and processing device for implementing the method; and
FIG. 13 is a storage unit for maintaining or carrying a program code for implementing the method.

### DETAILED DESCRIPTION

The regulating method and apparatus for air-conditioning based on networked interaction, and the electronic device according to the present invention will be illustrated in detail below with reference to the drawings, the particular embodiments and the application scenes thereof.

In order to make the objects, the technical solutions and the advantages of the present invention clearer, the technical solutions according to the present invention will be clearly and completely described below with reference to the drawings of the present invention. Apparently, the described embodiments are merely certain embodiments of the present invention, rather than all of the embodiments.

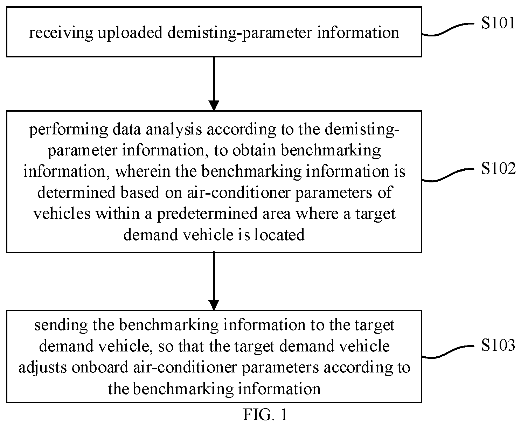

The present invention relates to a regulating method for an air-conditioner based on networked interaction, the air-conditioner based on networked interaction is an onboard intelligent air-conditioner that can interact with a network, and the method is applied to a cloud server. Its process is shown in FIG. 1, and includes:
S101: receiving uploaded demisting-parameter information.

The uploaded demisting-parameter information is received to be used for the analysis and calculation of the subsequent steps. The demisting-parameter information includes the initial air-conditioner parameters, the demisting duration and the demisting speed.

It should be noted that the initial air-conditioner parameters are the air-conditioner parameters that were uploaded at the first time, and they may be the default air-conditioner parameters, and may also be air-conditioner parameters that are set by the user manually. The demisting duration and the demisting speed refer to the time and the speed for demisting the vehicle windows with the current air-conditioner parameters of the vehicle. Certainly, the above are merely particular examples, and in practical usage, the demisting-parameter information may further include other data, which are not discussed further herein.

S102: performing data analysis according to the demisting-parameter information, to obtain benchmarking information, wherein the benchmarking information is determined based on air-conditioner parameters of vehicles within a predetermined area where a target demand vehicle is located. The term "target demand vehicle" refers to a target vehicle having a demand to adjust its onboard air-conditioner parameters.

According to the received uploaded demisting-parameter information, data analysis and calculation is performed to the demisting-parameter information, to obtain the optimum scheme of the air-conditioner parameters within the predetermined area, i.e., the benchmarking information. Further, the benchmarking information is stored, which is not only for the current application, but also facilitates the invoking when the similar situation appears again. The particular data analysis process will be described next, and is not discussed further herein.

S103: sending the benchmarking information to the target demand vehicle, so that the target demand vehicle adjusts onboard air-conditioner parameters according to the benchmarking information.

According to the peripheral-environment weather information, a vehicle in the same environment weather, within the same area and having the same brand is determined to be the target demand vehicle, among them, the same area is within a predetermined distance, and the peripheral-environment weather information includes locating information, real-time-weather-forecast information, and information acquired from the weather information collected by the vehicle. Moreover, the target demand vehicle is a vehicle of which the onboard air-conditioner parameters need to be adjusted. The particular contents of the weather information collected by the vehicle and the step of determining the target demand vehicle will be described below, and are not discussed further herein.

The present invention includes: receiving the uploaded demisting-parameter information; performing data analysis according to the demisting-parameter information, to obtain the benchmarking information, wherein the benchmarking information is determined based on the air-conditioner parameters of the vehicles within the predetermined area where the target demand vehicle is located; and sending the benchmarking information to the target demand vehicle, so that the target demand vehicle adjusts onboard air-conditioner parameters according to the benchmarking information. Which enables the target demand vehicle to realize a reasonable setting of the onboard air conditioner, which improves the driving comfortableness and the driving safety of the user.

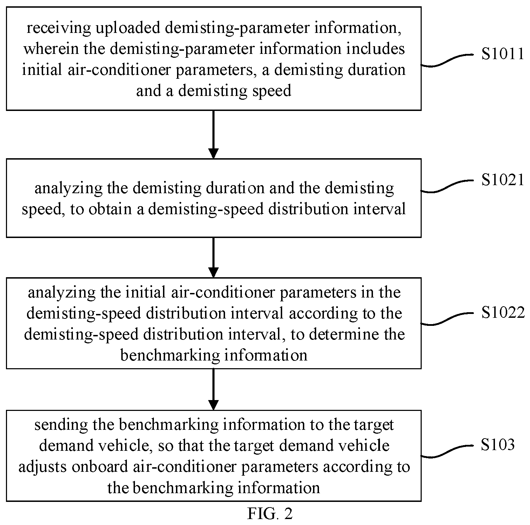

The present invention also relates to a regulating method for an air-conditioner based on networked interaction, applied to a cloud server. Its process is shown in FIG. 2, and includes:

S1011: receiving uploaded demisting-parameter information, wherein the demisting-parameter information includes initial air-conditioner parameters, a demisting duration and a demisting speed.

The uploaded demisting-parameter information is received to be used for the analysis and calculation of the subsequent steps. The demisting-parameter information includes the initial air-conditioner parameters, the demisting duration and the demisting speed.

It should be noted that the initial air-conditioner parameters are the air-conditioner parameters that were uploaded at the first time, and they may be the default air-conditioner parameters, and may also be air-conditioner parameters that are set by the user manually. The demisting duration and the demisting speed refer to the time and the speed for demisting the vehicle windows with the current air-conditioner parameters of the vehicle. Certainly, the above are merely particular examples, and in practical usage the demisting-parameter information may further contain other data, which are not discussed further herein.

S1021: analyzing the demisting duration and the demisting speed, to obtain a demisting-speed distribution interval.

The cloud server performs the normal distribution of the demisting duration and the demisting speed according to big data. The purpose of the normal distribution is to remove abnormal information or extreme information, and select the reasonable data information, to provide more accurate data for the subsequent data analysis.

Further, the air-conditioner setting information in the distribution interval of the demisting speed within a predetermined range is screened out to be used as the information of the initial air-conditioner parameters that are required to be analyzed, to provide the data for the subsequent analysis and calculation of the benchmarking information.

S1022: analyzing the initial air-conditioner parameters in the demisting-speed distribution interval according to the demisting-speed distribution interval, to determine the benchmarking information.

According to the demisting-speed distribution interval, variance analysis is performed, to determine the benchmarking information, and the benchmarking information is stored.

Optionally, according to the demisting-speed distribution interval, variance analysis is performed to the initial air-conditioner parameters in the demisting-speed distribution interval, which means that the air-conditioner setting information in the distribution interval of the demisting speed within the predetermined range is screened out, and subsequently variance analysis is performed to the air-conditioner setting information, thereby the optimum air-conditioner setting information is obtained as the benchmarking information. Further, the obtained benchmarking information is stored, which is not only for the current application, but also facilitates the invoking when the similar situation appears again.

S103: sending the benchmarking information to the target demand vehicle, so that the target demand vehicle adjusts onboard air-conditioner parameters according to the benchmarking information.

The cloud server, after receiving the peripheral-environment weather information uploaded by a vehicle within a demand area (areas that are in the same environment weather and are within a predetermined distance from this vehicle are the same area), according to the peripheral-environment weather information, determines a vehicle in the same environment weather, within the same area and having the same brand to be the target demand vehicle. The particular contents of the determination on the demand vehicle will be described below, and are not discussed further herein.

Optionally, the same area is within a predetermined distance, and the peripheral-environment weather information includes the locating information, the real-time-weather-forecast information, and the weather information collected by the vehicle. The locating information includes high-precision map locating and GNSS-chip precise locating. The high-precision map locating can complement the map of the periphery of the vehicle. The GNSS chip can realize the precise locating of the vehicle itself. Under the double assurance, the purpose of more accurate vehicle locating is realized.

Now data analysis according to the above and the calculation process of the benchmarking information is described in detail.

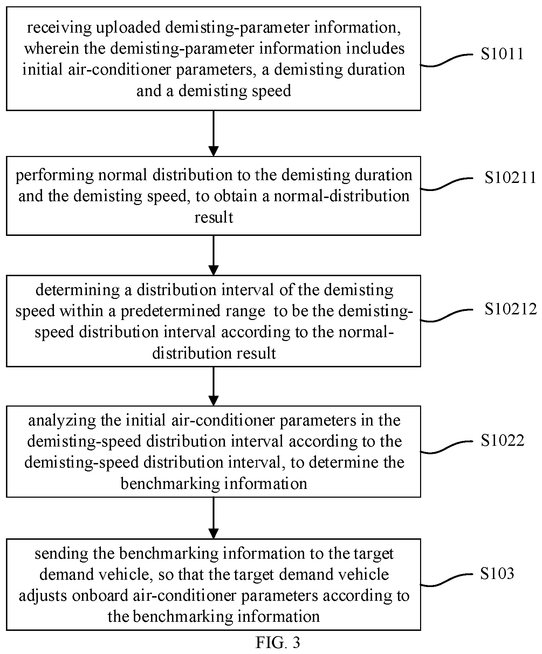

The present invention relates to a regulating method for an air-conditioner based on networked interaction, applied to a cloud server. Its process is shown in FIG. 3, and includes:
S1011: receiving uploaded demisting-parameter information, wherein the demisting-parameter information includes initial air-conditioner parameters, a demisting duration and a demisting speed.

The uploaded demisting-parameter information is received to be used for the analysis and calculation of the subsequent steps. The demisting-parameter information includes the initial air-conditioner parameters, the demisting duration and the demisting speed.

It should be noted that the initial air-conditioner parameters are the air-conditioner parameters that were uploaded at the first time, and they may be the default air-conditioner parameters, and may also be air-conditioner parameters that are set by the user manually. The demisting duration and the demisting speed refer to the time and the speed for demisting the vehicle windows with the current air-conditioner parameters of the vehicle. Certainly, the above are merely particular examples, and in practical usage the demisting-parameter information may further contain other data, which are not discussed further herein.

S10211: performing normal distribution to the demisting duration and the demisting speed, to obtain a normal-distribution result.

The cloud server performs the normal distribution of the demisting duration and the demisting speed according to big data. The purpose of the normal distribution is to remove abnormal information or extreme information, and select the reasonable data information, to provide more accurate data for the subsequent data analysis.

Optionally, the data screening using the normal distribution is screening according to the distribution range based on big data, which can more quickly and more effectively screen the data.

S10212: determining a distribution interval of the demisting speed within the predetermined range to be the demisting-speed distribution interval according to the normal-distribution result.

In this step, according to the normal-distribution result obtained in the last step, the extreme data and the abnormal data at the two ends are excluded, and the reasonable range is selected to screen out the air-conditioner setting information in the distribution interval of the demisting speed within the predetermined range to be used as the information of the initial air-conditioner parameters that are required to be analyzed, to provide the data for the subsequent analysis and calculation of the benchmarking information.

S1022: analyzing the initial air-conditioner parameters in the demisting-speed distribution interval according to the demisting-speed distribution interval, to determine the benchmarking information.

According to the demisting-speed distribution interval, variance analysis is performed, to determine the benchmarking information, and the benchmarking information is stored.

Optionally, according to the demisting-speed distribution interval, variance analysis is performed to the initial air-conditioner parameters in the demisting-speed distribution interval, which means that the air-conditioner setting information in the distribution interval of the demisting speed within the predetermined range is screened out, and subsequently variance analysis is performed to the air-conditioner setting information, thereby the optimum air-conditioner setting information is obtained as the benchmarking information. Further, the obtained benchmarking information is stored, which is not only for the current application, but also facilitates the invoking when the similar situation appears again.

S103: sending the benchmarking information to the target demand vehicle, so that the target demand vehicle adjusts onboard air-conditioner parameters according to the benchmarking information.

The cloud server, after receives the peripheral-environment weather information uploaded by a vehicle within a demand area (an area that is in the same environment weather and is within a predetermined distance from this vehicle is the same area), according to the peripheral-environment weather information, determines a vehicle in the same environment weather, within the same area and having the same brand to be the target demand vehicle. The particular contents of the determination on the demand vehicle will be described below, and are not discussed further herein.

Optionally, the same area is within a predetermined distance, and the peripheral-environment weather information includes the locating information, the real-time-weather-forecast information, and the weather information collected by the vehicle. The locating information includes high-precision map locating and GNSS-chip precise locating. The high-precision map locating can complement the map of the periphery of the vehicle. The GNSS chip can realize the precise locating of the vehicle itself. Under the double assurance, the purpose of more accurate vehicle locating is realized.

In the following is further described the data analysis according to the above, the process of the analysis and calculation of the demisting-speed distribution interval, in detail.

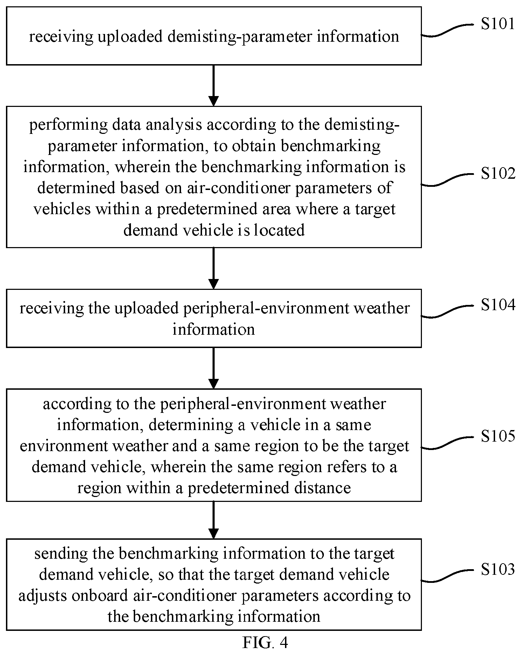

The present invention relates to a regulating method for air-conditioner based on networked interaction, applied to a cloud server. Its process is shown in FIG. 4, and includes:
S101: receiving uploaded demisting-parameter information.

The uploaded demisting-parameter information is received to be used for the analysis and calculation of the subsequent steps. The demisting-parameter information contains the initial air-conditioner parameters, the demisting duration and the demisting speed.

It should be noted that the initial air-conditioner parameters are the air-conditioner parameters that were uploaded at the first time, and they may be the default air-conditioner parameters, and may also be air-conditioner parameters that are set by the user manually. The demisting duration and the demisting speed refer to the time and the speed for demisting the vehicle windows with the current air-conditioner parameters of the vehicle. Certainly, the above are merely particular examples, and in practical usage the demisting-parameter information may further contain other data, which are not discussed further herein.

S102: performing data analysis according to the initial air-conditioner parameters, the demisting duration and the demisting speed, to obtain benchmarking information, wherein the benchmarking information is determined based on air-conditioner parameters of vehicles within a predetermined area where a target demand vehicle is located.

In the present embodiment, according to the received uploaded demisting-parameter information, data analysis and calculation is performed to the demisting-parameter information, to obtain the optimum scheme of the air-conditioner parameters within the predetermined area, i.e., the benchmarking information. Further, the benchmarking information is stored, which is not only for the current application, but also facilitates the invoking when the similar situation appears again. The particular data analysis process will be described in the next embodiment, and is not discussed further herein.

S104: receiving the uploaded peripheral-environment weather information.

The uploaded peripheral-environment weather information is received to be used for the determination on the target demand vehicle of the subsequent steps. The peripheral-environment weather information includes locating information, real-time-weather-forecast information, and weather information collected by the vehicle. The locating information contains high-precision map locating and GNSS-chip precise locating. The high-precision map locating can complement the map of the periphery of the vehicle. The GNSS chip can realize the precise locating of the vehicle itself. Under the double assurance, the purpose of more accurate vehicle locating is realized. The particular contents of the weather information collected by the vehicle will be described below, and are not discussed further herein.

S105: determining a vehicle in a same environment weather and a same area to be the target demand vehicle according to the peripheral-environment weather information, wherein the same area refers to an area within a predetermined distance.

S103: sending the benchmarking information to the target demand vehicle, so that the target demand vehicle adjusts onboard air-conditioner parameters according to the benchmarking information.

According to the peripheral-environment weather information, a vehicle in the same environment weather, within the same area and having the same brand is determined to be the target demand vehicle.

Optionally, the same area is within a predetermined distance, and the peripheral-environment weather information contains locating information, real-time-weather-forecast information, and weather information collected by the vehicle. The locating information contains high-precision map locating and GNSS-chip precise locating. The high-precision map locating can complement the map of the periphery of the vehicle. The GNSS chip can realize the precise locating of the vehicle itself. Under the double assurance, the purpose of more accurate vehicle locating is realized.

Optionally, the weather information collected by the vehicle includes the illumination, the water amount, and the angle of total reflection with which the lights enter the air from the glass, to determine the environment-weather information of the periphery of the vehicle. If the illuminance is 50-500 luxes, it is an overcast; if the illuminance is 100-1000 luxes, it is a clear day; the illuminance at a night is 0.001-0.02 luxes; and the sunshine illumination at a summer noon reaches above 10000 luxes. The water amount is measured by using a rain sensor. In other words, when the glass is dry, the light rays will be totally reflected, pass through a lens system to become parallel light, and are received by a receiver. When rainwater or raindrops is on the glass, because the refractive index changes, the light rays cannot be totally reflected, but are partially reflected depending on the areas of the water drops, in which case the rain sensor can merely receive part of the signals, and determine the magnitude of the rain amount according to the percentage value. When the percentage of the total reflection of the lights through the glass is 100% (the angle of total reflection is 42°), that indicates a no-rain state. When the angle of total reflection of the lights through the glass decreases to 80% (the angle of total reflection is 62°), that indicates a rain state, wherein 60% is a moderate rain, and 40% or lower is a heavy rain. Certainly, the above are merely particular examples, and in practical usage the demisting-parameter information may further contain other data, which are not discussed further herein.

The data acquired by the onboard sensing system include but are not limited to the following. An onboard rain-mist sensor in the vehicle detects the misting of the vehicle, according to the resistance value of the rain-mist sensor, determines the level of misting, feeds back to an information memory, and sends a defrosting signal via an ECU. After it has been confirmed that the user permits the starting-up of a vehicle-vehicle mutual-helping mode, the defrosting signal is assigned to the different shifts of the air-conditioner blower, and the current air-conditioner parameters are adjusted into the preset parameters, wherein the preset parameters refer to, in the default setting of the vehicle, the air-conditioner parameters that are set by default in the vehicle-vehicle mutual-helping mode when the vehicle windows are misting in any weather. Furthermore, the air-conditioner setting of itself is uploaded to the cloud, and at the same time the information pushed by the cloud server is accepted, i.e., information interaction with the cloud server. The intelligent network-connected system started up by the user realizes the information interaction of the current vehicle misting situation with the external and with the cloud by using a V2X technique.

The operation of the information reception and emission requires the vehicle to start up the onboard vehicle-vehicle mutual-helping mode. The user will be asked for the permission on the starting-up of the vehicle-vehicle mutual-helping mode. If the user requires, the user may receive the reasonable setting of the air conditioner pushed by the cloud by using a button or the default setting. If the user does not require, he may shut down that function directly by using a button or the default setting.

In addition, it should be noted that the rain-mist sensor determines the concentration of the mist according to the resistance value of the rain-mist sensor. The concentration of the mist may be defined as follows. The grade 1 is haze, in which the visibility is high. The grade 2 is mist, in which the visibility seriously decreases. The grade 3 is heavy mist, in which the visibility is 0.

In addition, the rain-mist sensor, when has detected that the demisting has been completed, feeds back that to the information memory, and sends a defrosting-completion signal via the ECU. The air-conditioner parameters are adjusted back to the initial air-conditioner parameters before the air conditioner is set to be the preset parameters, to ensure the comfortableness of the user. The parameters of the air-conditioner setting include the air-conditioner outer circulation, the blower switch, the blower blowing rate, and the air-conditioner outlet air temperature.

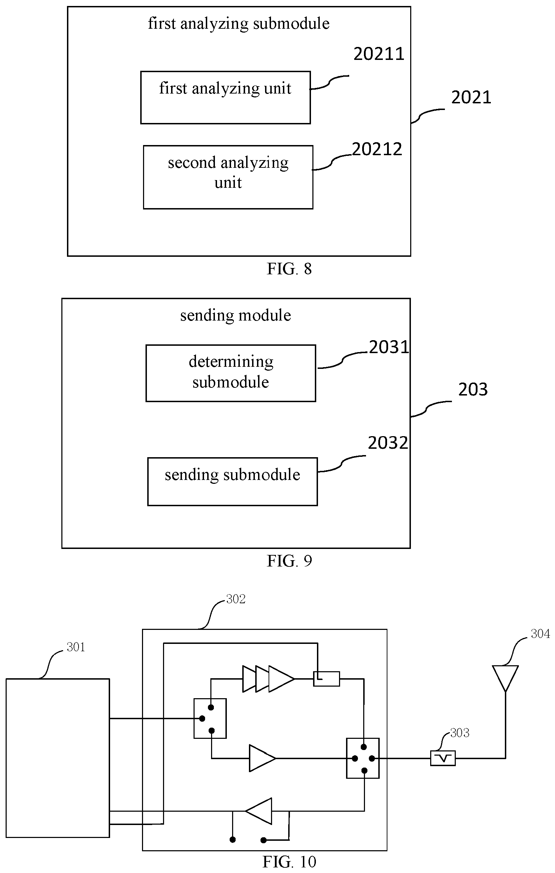

The present invention can be implemented in a 5G network device. As shown in FIG. 10, the device includes:

A 5G module 301, an integrated front-end module 302, a high-performance notching filter 303 and an ANT_1304. The 5G integrated front-end module formed by the 5G module 301, the integrated front-end module 302 and the ANT_1304 has the characteristic of a low time delay, wherein the air-interface time delay is less than 1 millisecond, and the time delay of the business layer can be controlled within 10 milliseconds. Based on the 5G integrated front-end module, the high-performance notching filter 303 is added, which improves the reliability and the precision of the 5G network. For example, at the vehicle speed of 120km/h, the braking distance caused by the communication time delay in 5G can be controlled within 33cm. The 5G real-time high-precision locating may provide a powerful technical support for implementing the present invention.

In the following, there is additional description on the step of determining the target demand vehicle, described in detail the particular contents of the weather information collected by the vehicle, and further supplemented and elaborated the technical solutions.

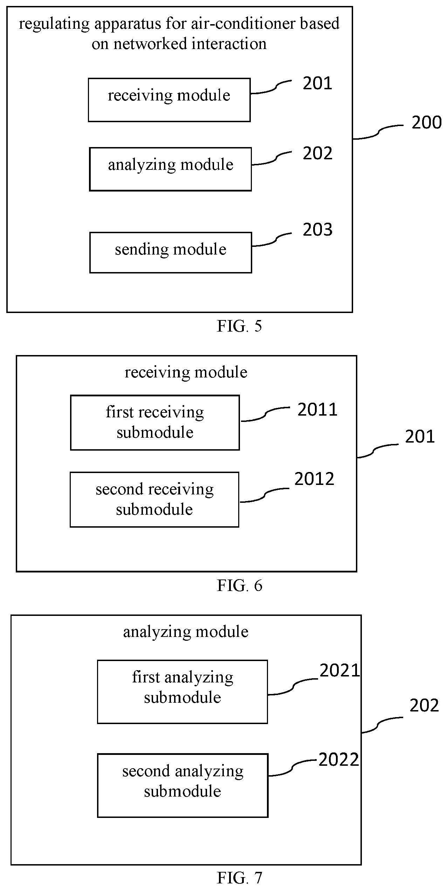

The present invention may be implemented as a regulating apparatus for an air-conditioner based on networked interaction, applied to a cloud server. As shown in FIG. 5, the apparatus then includes:
a receiving module 201 configured for receiving uploaded demisting-parameter information;
an analyzing module 202 configured for performing data analysis to the demisting-parameter information, to obtain benchmarking information, wherein the benchmarking information is determined based on air-conditioner parameters of vehicles within a predetermined area where a target demand vehicle is located; and
a sending module 203 configured for sending the benchmarking information to the target demand vehicle, so that the target demand vehicle adjusts onboard air-conditioner parameters according to the benchmarking information.

Further, as shown in FIG. 6, the receiving module 201 includes:
a first receiving submodule 2011 configured for receiving the uploaded demisting-parameter information, wherein the demisting-parameter information contains a demisting duration and a demisting speed; and
a second receiving submodule 2012 configured for receiving uploaded peripheral-environment weather information.

Optionally, as shown in FIG. 7, the analyzing module 202 includes:
a first analyzing submodule 2021 configured for analyzing the demisting duration and the demisting speed, to obtain a demisting-speed distribution interval; and
a second analyzing submodule 2022 configured for analyzing air-conditioner setting information in the demisting-speed distribution interval according to the demisting-speed distribution interval, to determine the benchmarking information.

Optionally, as shown in FIG. 8, the first analyzing submodule 2021 includes:
a first analyzing unit 20211 configured for performing normal distribution to the demisting duration and the demisting speed, to obtain a normal-distribution result; and
a second analyzing unit 20212 configured for determining a distribution interval of the demisting speed within the predetermined range to be the demisting-speed distribution interval according to the normal-distribution result.

Optionally, as shown in FIG. 9, the sending module 203 includes:
a determining submodule 2031 configured for determining a vehicle in a same environment weather and a same area to be the target demand vehicle according to the peripheral-environment weather information, wherein the same area refers to an area within a predetermined distance; and
a sending submodule 2032 configured for sending the benchmarking information to the target demand vehicle, so that the target demand vehicle adjusts onboard air-conditioner parameters according to the benchmarking information.

The above described relates to a particular implementation method of an apparatus, which may refer to the methods provided in the above description of the present invention, and is not discussed further herein.

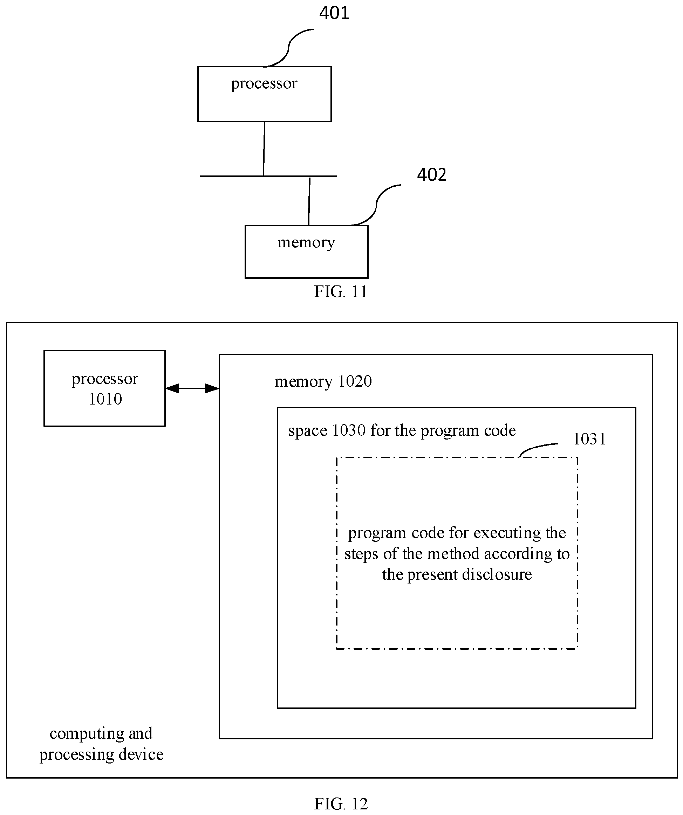

The present invention further provides an electronic device. As shown in FIG. 11, the electronic device includes:
at least one processor 401; and
a memory 402 communicatively connected to the at least one processor 401; and
the memory 402 stores an instruction executable by the at least one processor, and the instruction is executed by the at least one processor 401, to enable the at least one processor 401 to implement one of the above described the methods.

The memory and the processor are connected by means of a bus. The bus may include interconnected buses and bridges of any quantities. The bus connects the various circuits of one or more processors and memories together. The bus may further connect various other circuits such as peripheral devices, voltage regulators and power managing circuits together, all of which are well known in the art, and are not described further herein. Bus interfaces provide the interfaces between the bus and the transceiver. Transceiver may be one element, and may also be a plurality of elements, for example, a plurality of receivers and emitters, to provide units for communicating with various other devices via a transmission medium. The data that have been processed by the processor are transmitted by using an antenna via a wireless medium. The antenna further receives data and transmits the data to the processor.

The processor serves for the management of the bus and common processing, and may further provide various functions, for example, the timing, the peripheral interfaces, the voltage regulation, the power-supply management and other controlling functions. Moreover, the memory may be configured to store the data that the processor uses in operation.

The description above is in the mode of progression, each of the examples emphatically describes the differences from the other examples, and the same or similar parts may refer to each other.

The present invention is described with reference to the flow charts and/or block diagrams of the method, the terminal device (system), and the computer program product. It should be understood that each flow and/or block in the flow charts and/or block diagrams, and combinations of the flows and/or blocks in the flow charts and/or block diagrams, may be implemented by a computer program instruction. The computer program instructions may be provided to a processor of a general-purpose computer, a special-purpose computer, an embedded processor, or another programmable data processing terminal device to generate a machine, so that a device for implementing the functions specified in one or more flows of the flow charts and/or one or more blocks of the block diagrams can be generated by instructions executed by the processor of the computers or the other programmable data processing terminal device.

The computer program instructions may also be stored in a computer-readable memory that can instruct the computers or the other programmable data processing terminal device to operate in a specific mode, so that the instructions stored in the computer-readable memory generate an article including an instruction device, and the instruction device implements the functions specified in one or more flows of the flow charts and/or one or more blocks of the block diagrams.

The computer program instructions may also be loaded to the computers or the other programmable data processing terminal device, so that the computers or the other programmable data processing terminal device implement a series of operation steps to generate the computer-implemented processes, whereby the instructions executed in the computers or the other programmable data processing terminal device provide the steps for implementing the functions specified in one or more flows of the flow charts and/or one or more blocks of the block diagrams.

Finally, it should also be noted that, in the present text, relation terms such as first and second are merely intended to distinguish one entity or operation from another entity or operation, and that does not necessarily require or imply that those entities or operations have therebetween any such actual relation or order. Furthermore, the terms "include", "comprise" or any variants thereof are intended to cover non-exclusive inclusions, so that processes, methods, articles or terminal devices that include a series of elements do not only include those elements, but also include other elements that are not explicitly listed, or include the elements that are inherent to such processes, methods, articles or terminal devices. Unless further limitation is set forth, an element defined by the wording "comprising a ..." does not exclude additional same element in the process, method, article or terminal device comprising the element.

Each component embodiment of the present invention may be implemented by hardware, or by software modules that are operated in one or more processors, or by a combination thereof. A person skilled in the art should understand that some or all of the functions of some or all of the components of the computing and processing device may be implemented by using a microprocessor or a digital signal processor (DSP) in practice. The present invention may also be implemented as apparatus or device programs (for example, computer programs and computer program products) for implementing part of or the whole of the method described herein. Such programs for implementing the present invention may be stored in a computer-readable medium, or may be in the form of one or more signals. Such signals may be downloaded from an Internet website, or provided on a carrier signal, or provided in any other forms.

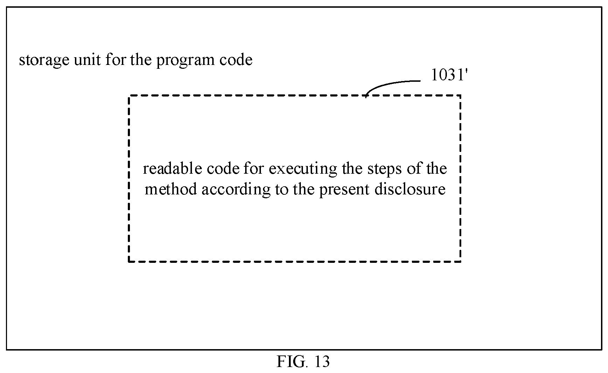

For example, FIG. 12 shows a computing and processing device that can implement the method according to the present invention. The computing and processing device traditionally includes a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 13. The storage unit may have storage segments or storage spaces with similar arrangement to the memory 1020 of the computing and processing device in FIG. 12. The program codes may, for example, be compressed in a suitable form. Generally, the storage unit contains a computer-readable code 1031', which can be read by a processor like 1010. When those codes are executed by the computing and processing device, the codes cause the computing and processing device to implement each of the steps of the method described above.

In the claims, any reference signs between parentheses should not be construed as limiting the claims. The word "comprise" does not exclude elements or steps that are not listed in the claims. The word "a" or "an" preceding an element does not exclude the existing of a plurality of such elements. The present invention may be implemented by means of hardware comprising several different elements and by means of a properly programmed computer. In unit claims that list several devices, some of those devices may be embodied by the same item of hardware. The words first, second, third and so on do not denote any order. Those words may be interpreted as names.

## Claims

1. A regulating method for adjusting onboard air-conditioner parameters for demisting vehicle windows of a target demand vehicle during driving based on networked interaction, carried out by a cloud server, wherein the method comprises:
(S101; S1011) receiving demisting-parameter information including initial air-conditioner parameters, demisting duration and demisting speed;
(S102) performing data analysis according to the demisting-parameter information, to obtain benchmarking information, wherein the benchmarking information defines an optimum scheme of the air-conditioner parameters and is determined based on air-conditioner parameters of vehicles within a predetermined area where the target demand vehicle is located, wherein the step of (S102) performing data analysis according to the demisting-parameter information, to obtain the benchmarking information comprises:
- (S1021) analyzing the demisting duration and the demisting speed, to obtain a demisting-speed distribution interval, wherein the step of (S1021) analyzing the demisting duration and the demisting speed, to obtain the demisting-speed distribution interval comprises:
+ (S10211) performing a normal distribution to the demisting duration and the demisting speed, to obtain a normal-distribution result; and
+ (S10212) determining a distribution interval of the demisting speed within a predetermined range to be the demisting-speed distribution interval according to the normal-distribution result; and
- (S1022) analyzing the initial air-conditioner parameters in the demisting-speed distribution interval according to the demisting-speed distribution interval, to determine the benchmarking information; and
(S103) sending the benchmarking information to the target demand vehicle for adjusting its onboard air-conditioner parameters according to the benchmarking information.

2. The regulating method for air-conditioner based on networked interaction according to claim 1, wherein before the step of (S104) sending the benchmarking information to the target demand vehicle, the method further comprises:
(S104) receiving uploaded peripheral-environment weather information; and
(S105) determining a vehicle in a same environment weather and a same area to be the target demand vehicle according to the peripheral-environment weather information, wherein the same area refers to an area within a predetermined distance.

3. An electronic device, comprising:
at least one processor (401); and
a memory (402) communicatively connected to the at least one processor (401);
wherein the memory (402) stores an instruction executable by the at least one processor (401), and the instruction is executed by the at least one processor, to enable the at least one processor (401) to implement the method according to claim 1 or 2.

4. A computer program, wherein the computer program comprises a computer-readable code, and when the computer-readable code is executed in a computing and processing device, the computer-readable code causes the computing and processing device to implement the regulating method for air-conditioner based on networked interaction according to claim 1 or 2.

5. A computer-readable medium, wherein the computer-readable medium stores the computer program according to claim 4.

## Patentansprüche

1. Regelungsverfahren zum Einstellen von Bordklimaanlagenparametern zur Entbeschlagung von Fahrzeugscheiben eines Ziel-Anforderungsfahrzeugs während der Fahrt basierend auf vernetzter Interaktion, ausgeführt durch einen Cloud-Server, wobei das Verfahren aufweist:
(S101; S1011) Empfangen von Entbeschlagungsparameterinformation, die anfängliche Klimaanlagenparameter, Entbeschlagungsdauer und Entbeschlagungsgeschwindigkeit aufweist;
(S102) Durchführen einer Datenanalyse gemäß der Entbeschlagungsparameterinformation, um Leistungsvergleichsinformation zu erhalten, wobei die Leistungsvergleichsinformation ein optimales Schema der Klimaanlagenparameter definiert und basierend auf Klimaanlagenparametern von Fahrzeugen innerhalb eines vorbestimmten Gebiets, in dem sich das Ziel-Anforderungsfahrzeug befindet, bestimmt wird, wobei der Schritt des (S102) Durchführens einer Datenanalyse gemäß der Entbeschlagungsparameterinformation, um die Leistungsvergleichsinformation zu erhalten, aufweist:
(S1021) Analysieren der Entbeschlagungsdauer und der Entbeschlagungsgeschwindigkeit, um ein Verteilungsintervall der Entbeschlagungsgeschwindigkeit zu erhalten, wobei der Schritt des (S1021) Analysierens der Entbeschlagungsdauer und der Entbeschlagungsgeschwindigkeit, um das Verteilungsintervall der Entbeschlagungsgeschwindigkeit zu erhalten, aufweist:
(S10211) Durchführen einer Normalverteilung der Entbeschlagungsdauer und der Entbeschlagungsgeschwindigkeit, um ein Normalverteilungsergebnis zu erhalten; und
(S10212) Bestimmen eines Verteilungsintervalls der Entbeschlagungsgeschwindigkeit innerhalb eines vorbestimmten Bereichs als das Verteilungsintervall der Entbeschlagungsgeschwindigkeit gemäß dem Normalverteilungsergebnis; und
(S1022) Analysieren der anfänglichen Klimaanlagenparameter in dem Verteilungsintervall der Entbeschlagungsgeschwindigkeit gemäß dem Verteilungsintervall der Entbeschlagungsgeschwindigkeit, um die Leistungsvergleichsinformation zu bestimmen; und
(S103) Senden der Leistungsvergleichsinformation an das Ziel-Anforderungsfahrzeug zum Einstellen seiner Bordklimaanlagenparameter gemäß der Leistungsvergleichsinformation.

2. Regelungsverfahren für eine Klimaanlage basierend auf vernetzter Interaktion nach Anspruch 1, wobei vor dem Schritt des (S104) Sendens der Leistungsvergleichsinformation an das Ziel-Anforderungsfahrzeug das Verfahren ferner aufweist:
(S104) Empfangen von hochgeladener peripherer Umgebungswetterinformation; und
(S105) Bestimmen eines Fahrzeugs in einem gleichen Umgebungswetter und einem gleichen Gebiet als das Ziel-Anforderungsfahrzeug gemäß der peripheren Umgebungswetterinformation, wobei das gleiche Gebiet ein Gebiet innerhalb eines vorbestimmten Abstands bezeichnet.

3. Elektronische Vorrichtung, aufweisend:
mindestens einen Prozessor (401); und
einen Speicher (402), der kommunikativ mit dem mindestens einen Prozessor (401) verbunden ist;
wobei der Speicher (402) eine durch den mindestens einen Prozessor (401) ausführbare Anweisung speichert und die Anweisung durch den mindestens einen Prozessor ausgeführt wird, um den mindestens einen Prozessor (401) zu befähigen, das Verfahren nach Anspruch 1 oder 2 zu implementieren.

4. Computerprogramm, wobei das Computerprogramm einen computerlesbaren Code aufweist, und wenn der computerlesbare Code in einer Rechen- und Verarbeitungsvorrichtung ausgeführt wird, der computerlesbare Code die Rechen- und Verarbeitungsvorrichtung veranlasst, das Regelungsverfahren für eine Klimaanlage basierend auf vernetzter Interaktion nach Anspruch 1 oder 2 zu implementieren.

5. Computerlesbares Medium, wobei das computerlesbare Medium das Computerprogramm nach Anspruch 4 speichert.

## Revendications

1. Procédé de régulation pour régler des paramètres de climatiseur embarqué pour désembuer les vitres de véhicule d'un véhicule en demande cible pendant la conduite sur la base d'une interaction en réseau mise en œuvre par un serveur infonuagique, dans lequel le procédé comprend :
(S101 ; S1011) la réception d'une information de paramètres de désembuage qui inclut des paramètres de climatiseur initiaux, une durée de désembuage et une vitesse de désembuage ;
(S102) la réalisation d'une analyse de données conformément à l'information de paramètres de désembuage, afin d'obtenir une information d'analyse comparative, dans lequel l'information d'analyse comparative définit un schéma optimum des paramètres de climatiseur et est déterminée sur la base de paramètres de climatiseur de véhicules à l'intérieur d'une zone prédéterminée au niveau de laquelle le véhicule en demande cible est localisé, dans lequel l'étape (S102) de réalisation d'une analyse de données conformément à l'information de paramètres de désembuage afin d'obtenir l'information d'analyse comparative comprend :
- (S1021) l'analyse de la durée de désembuage et de la vitesse de désembuage afin d'obtenir un intervalle de distribution de vitesse de désembuage, dans lequel l'étape (S1021) d'analyse de la durée de désembuage et de la vitesse de désembuage afin d'obtenir l'intervalle de distribution de vitesse de désembuage comprend :
+ (S10211) la réalisation d'une distribution normale sur la durée de désembuage et la vitesse de désembuage afin d'obtenir un résultat de distribution normale ; et
+ (S10212) la détermination d'un intervalle de distribution de la vitesse de désembuage à l'intérieur d'une plage prédéterminée comme étant l'intervalle de distribution de vitesse de désembuage conformément au résultat de distribution normale ; et
- (S1022) l'analyse des paramètres de climatiseur initiaux dans l'intervalle de distribution de vitesse de désembuage conformément à l'intervalle de distribution de vitesse de désembuage afin de déterminer l'information d'analyse comparative ; et
(S103) l'envoi de l'information d'analyse comparative sur le véhicule en demande cible pour régler ses paramètres de climatiseur embarqué conformément à l'information d'analyse comparative.

2. Procédé de régulation pour un climatiseur sur la base d'une interaction en réseau selon la revendication 1, dans lequel, avant l'étape (S104) d'envoi de l'information d'analyse comparative sur le véhicule en demande cible, le procédé comprend en outre :
(S104) la réception d'une information de météorologie d'environnement périphérique téléchargée ; et
(S105) la détermination d'un véhicule soumis à une même météorologie d'environnement et situé dans une même zone comme étant le véhicule en demande cible conformément à l'information de météorologie d'environnement périphérique, dans lequel la même zone se réfère à une zone à l'intérieur d'une distance prédéterminée.

3. Dispositif électronique, comprenant :
au moins un processeur (401) ; et
une mémoire (402) connectée en termes de communication à l'au moins un processeur (401) ;
dans lequel la mémoire (402) stocke une instruction qui peut être exécutée par l'au moins un processeur (401), et l'instruction est exécutée par l'au moins un processeur pour permettre à l'au moins un processeur (401) de mettre en œuvre le procédé selon la revendication 1 ou 2.

4. Programme informatique, dans lequel le programme informatique comprend un code lisible par ordinateur, et lorsque le code lisible par ordinateur est exécuté dans un dispositif informatique et de traitement, le code lisible par ordinateur a pour effet que le dispositif informatique et de traitement met en œuvre le procédé de régulation pour un climatiseur sur la base d'une interaction en réseau selon la revendication 1 ou 2.

5. Support lisible par ordinateur, dans lequel le support lisible par ordinateur stocke le programme informatique selon la revendication 4.
